# EUROPEAN PATENT APPLICATION

(11) **EP 4 711 600 A1**
(43) Date of publication of application: **18.03.2026**
(21) Application number: 25196316.1
(22) Date of filing: 18.08.2025
(51) Int. Cl.: F02C 7/224

(54) **GAS TURBINE ENGINE**

(30) Priority: 16.09.2024 GB 202413594
(71) Applicant: Rolls-Royce plc, London N1 9FX (GB)
(72) Inventor: Hill, Emma L, Derby, DE24 8BJ (GB); Peace, Richard, Derby, DE24 8BJ (GB); McCabe, Paul S, Derby, DE24 8BJ (GB)
(74) Representative: Rolls-Royce plc

(57) **Abstract**

A gas turbine engine 108A comprises an engine core 201 having first 222 and second 224 engine core exhaust paths arranged to pass first and second portions respectively of the mass flow of the engine's core exhaust mass. A heat-exchange system comprises a recuperator system 230A-D disposed within the first engine core exhaust path and arranged to transfer heat from said first portion to a buffer fluid, and a heat exchanger arranged to transfer heat from the buffer fluid to fuel within a fuel path arranged to convey fuel to the engine's combustor 208. The engine provides for heat to be recovered from the engine's core exhaust flow to the engine's fuel supply, thus improving thermal efficiency, but without significantly impeding the engine core exhaust flow or presenting the significant fire or explosion risk associated with a recuperator arranged to heat fuel directly.

## Description

### TECHNICAL FIELD

The invention relates to gas turbine engines.

### BACKGROUND

It is known to use a recuperator within a gas turbine engine to transfer heat from exhaust gases to compressed air discharged from the compressor section of the engine prior to its input to a combustor. This increases the thermal efficiency of the engine, since waste heat which would otherwise be expelled from the engine is re-introduced into the engine cycle. However, the advantages of a recuperated cycle are greatly (and, in some cases, entirely) offset by a reduction in propulsive efficiency caused by the restriction of exhaust gas flow associated with the presence of the recuperator. Additionally, restricting exhaust gas flow tends to increase back-pressure, reducing power extraction from the turbine and engine power density. A further disadvantage of known recuperated designs is the that the recuperator is vulnerable to foreign or domestic object damage since the recuperator is located within the core engine gas path. A recuperator may be used to transfer heat from exhaust gases to engine fluids other than compressor discharge air, although for some engine fluids this can present a fire and/or explosion risk due to the very high temperature of the exhaust gases.

### SUMMARY

According to a first aspect of the invention, a gas turbine engine comprises an engine core having first and second engine core exhaust paths arranged to pass first and second portions respectively of the mass flow of the engine core exhaust of the engine during operation of thereof, and a heat-exchange system comprising:
(i) a recuperator system disposed within the first engine core exhaust path and arranged to transfer heat from the first portion of the mass flow of the engine core exhaust to a buffer fluid; and
(ii) a heat exchanger arranged to transfer heat from the buffer fluid to fuel within a fuel path arranged to convey fuel to a combustor of the gas turbine engine.

The engine core may have a central longitudinal axis and may comprise an engine core nacelle having first and second engine core nacelle portions, the first engine core nacelle portion extending axially from the upstream end of the engine core nacelle to a first axial position downstream of the turbine section of the gas turbine engine and the second engine core nacelle portion being disposed radially inwardly of the first engine core nacelle portion and extending axially from a second axial position downstream of the turbine section to a downstream end of the engine core nacelle, the second axial position being upstream of the first axial position, and wherein the first engine core exhaust path is located radially within an annulus defined by the first and second engine core nacelle portions and the second engine core exhaust path is located radially inwardly of the second engine core nacelle portion.

**The** recuperator system may comprise a plurality of heat-exchangers arranged in series or in parallel within a loop path which includes a pump and which is arranged to circulate the buffer fluid through the heat-exchangers, the heat-exchangers being distributed azimuthally with respect to the central longitudinal axis of the gas turbine engine.

**The** individual heat-exchangers may be distributed axially with respect to the central longitudinal axis of the gas turbine engine.

The loop path may include a heater arranged to heat buffer fluid within the loop path.

The cross-sectional area of the annulus defined by the first and second engine nacelle portions may increase downstream of the second axial position.

The engine core may have an exhaust cone section defined by the engine nacelle and the engine core nacelle at positions downstream of the second axial position.

The gas turbine engine may comprise an engine nacelle which terminates at an axial position intermediate the first and second axial positions.

The first engine core exhaust path may be arranged to pass between 10% and 15% of the engine core exhaust mass flow output by the turbine section of the gas turbine engine.

The gas turbine engine may be a hydrogen-burning gas turbine engine, the fuel path being arranged convey hydrogen fuel to the combustor.

The buffer fluid may be nitrogen.

A second aspect of the invention provides an aircraft comprising a gas turbine engine according to the first aspect.

### BRIEF DESCRIPTION OF THE DRAWINGS

Examples are described below with reference to the accompanying drawings, in which:
- FIG. 1: shows an aircraft of the invention;
- FIG. 2: shows a longitudinal cross-section through a turbofan engine of the FIG. 1 aircraft;
- FIG. 3: shows a diagram of a fuel and heat-exchange system of the FIG. 1 aircraft; and
- FIGS. 4 & 5: show perspective views of parts of the FIG. 2 engine.

### DETAILED DESCRIPTION

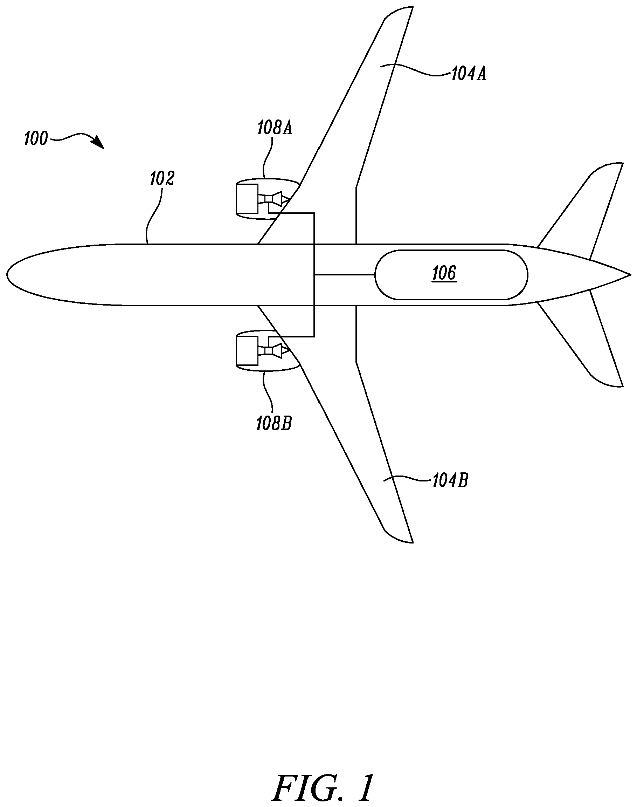

Figure 1 shows an aircraft 100 of the invention of substantially conventional tube-and-wing twinjet configuration with a central fuselage 102, wings 104A, 104B and identical starboard and port underwing-mounted, two-spool, hydrogen-burning turbofan engines 108A, 108B. A hydrogen storage tank 106 is located in the fuselage 102. The hydrogen storage tank 106 is a cryogenic hydrogen storage tank and thus stores hydrogen fuel in a liquid state, for example at a temperature of 25K. The hydrogen fuel may for example be pressurised to a pressure from around 1 bar to around 3 bar, or to 4 bar. Alternatively, the hydrogen may be stored as a cryogenically cooled, compressed gas or supercritical fluid. The starboard and port turbofan engines 108A, 108B are identical in structure and function; the description below is therefore largely directed to the starboard engine 108A.

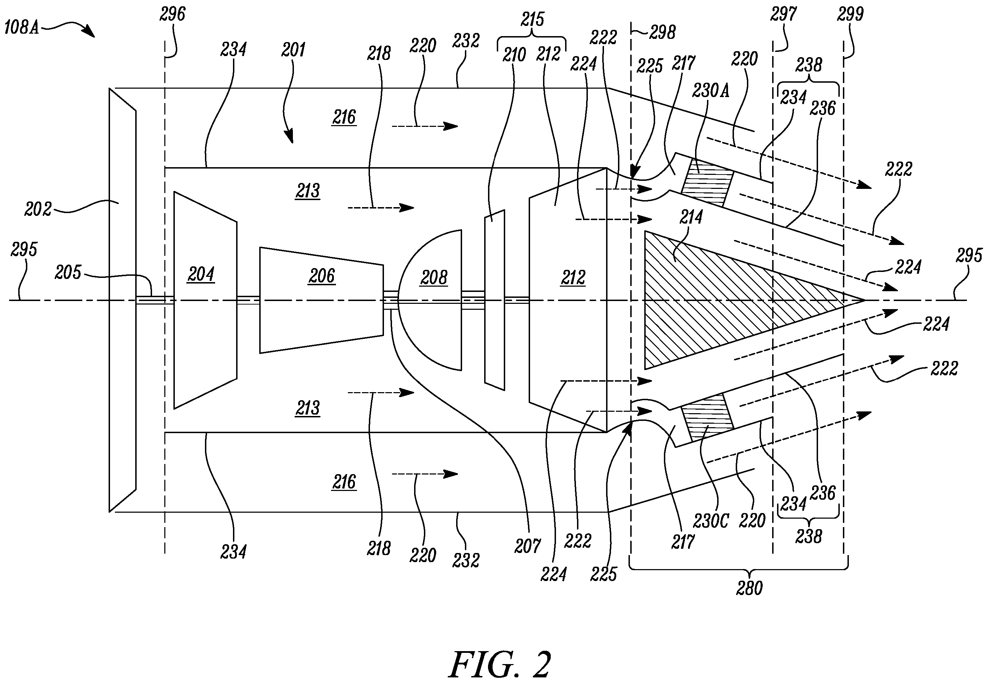

Figure 2 shows a longitudinal cross-section of the starboard turbofan engine 108A of the aircraft 100 of Figure 1 including the engine's central longitudinal axis 295. The turbofan engine 108A comprises a fan 202, an outer fixed structure, or engine nacelle, 232 and an engine core 201 comprising an engine core nacelle 238 made up of first and second engine core nacelle portions 234, 236. The engine core 201 has a gas annulus 213 and further comprises low- and high-pressure compressors 204, 206, a combustor 208, high-and low-pressure turbines 210, 212 and an inner exhaust cone 214. The high- and low-pressure turbines 210, 212 together constitute a turbine section 215. The fan 202, low-pressure compressor 204 and low-pressure turbine 212 are mounted to a low-pressure shaft 205. The high-pressure compressor 206 and the high-pressure turbine 210 are mounted to a high-pressure shaft 207. The radially inner surface of the engine nacelle 232 (with respect to the axis 295) and the radially outer surface of the first engine core nacelle portion 234 define a bypass duct 216 of the turbofan engine 108A. During operation of the turbofan engine 108A a core flow is established on a core flow path 218 within the gas annulus 213 and a bypass flow is established on a bypass flow path 220 within the bypass duct 216. In a variant of the aircraft 100, the starboard and port turbofan engines 108A, 108B are geared engines and in each case the low-pressure shaft of the engine is coupled to a fan via a reduction gear.

The first engine core nacelle portion 234 extends axially from the front or upstream end 296 of the engine core nacelle 238 to a first axial position 297 downstream or aft of the turbine section 215. The second engine core nacelle portion 236 is disposed radially inwardly of the first engine core nacelle portion 234 and extends axially from a second axial position 298 downstream of the turbine section 215 to the downstream end 299 of the engine core nacelle 238. The second axial position 298 is located upstream of the first axial position 297. An annular recuperator duct 217 exists between the first and second engine core nacelle portions 234, 236 over the axial interval between the first and second axial positions 297, 298. A recuperator comprising a series arrangement of four individual heat-exchangers 230A, 230B, 230C, 230D is located within the recuperator duct 217 at a single axial position. The heat-exchangers 230A-D are evenly distributed in azimuth at 90° intervals with respect to the central longitudinal axis 295. (Only heat-exchangers 230A, 230C are shown in Figure 2). Locations downstream of the second axial position 298 correspond to an exhaust cone section 280 of the turbofan engine 108A, the engine nacelle 232 and the first and second engine core nacelle portions 234, 236 each being generally frusto-conical downstream of the second axial position 298. The inner exhaust cone 214 is comprised in the exhaust cone section 280. In a variant of the turbofan engine 108A, the heat-exchangers 230A-D may additionally be distributed axially. At the second axial position 298, the first and second engine core nacelle portions 234, 236 define a scoop 225 extending radially inwardly into the core flow path 218 downstream of the turbine section 215. The engine nacelle 232 and the bypass duct 216 each terminate at an axial position intermediate the first and second axial positions 297, 298.

The first and second engine core nacelle portions 234, 236 and the inner exhaust cone 214 define first and second engine core exhaust paths 222, 224. The first engine core exhaust path 222 is defined radially between the first and second engine core nacelle portions 234, 236 over the axial interval between the first and second axial positions 297, 298. The second engine core exhaust path 224 is defined radially between the second engine core nacelle portion 236 and the inner exhaust cone 214 over the axial interval between the second axial position 298 and the downstream end 299 of the engine core nacelle 238.

In operation of the turbofan engine 108A, the core flow downstream of the turbine section 215 is an engine core exhaust flow having an engine core mass flow or mass flow rate. A first portion of the engine core exhaust mass flow exits the turbofan engine 108A via the first engine core exhaust path 222, losing heat to the heat-exchangers 230A-D within the recuperator duct 217. A second portion of the engine core exhaust mass flow exits the turbofan engine 108A via the second engine core exhaust path 224.

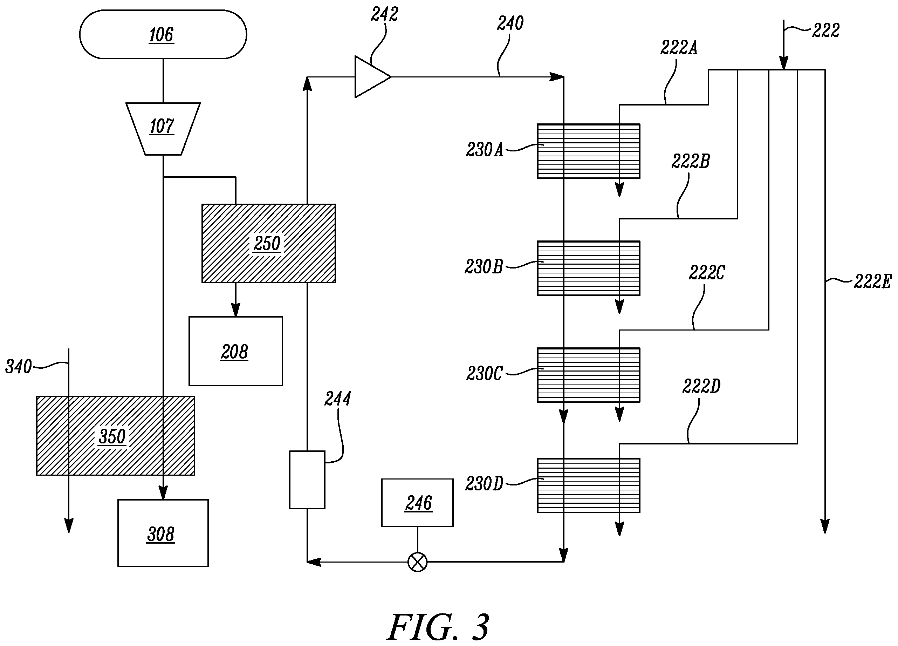

Figure 3 shows a diagram of a fuel and heat-exchange system of the aircraft 100 of Figure 1. The hydrogen storage tank 106 is coupled to the combustor 208 of the starboard turbofan engine 108A via a fuel pump 107 and a heat-exchanger 250. The heat-exchanger 250 may for example be mounted to the exterior of the engine nacelle 232. Similarly, the hydrogen storage tank 106 is coupled to the combustor 308 of the port turbofan engine 108B via the fuel pump 107 and a heat-exchanger 350 which may be mounted to the exterior of the port turbofan engine 108B. Each of the heat-exchangers 230A-D interacts with a respective sub-portion of the first portion of the engine core exhaust mass flow moving on a respective sub-portion 222A-D of the first engine core exhaust path 222. The sub-portions 222A-D of the first engine core exhaust path 222 each correspond to the azimuthal interval defined by a respective heat-exchanger 230A-D within the recuperator duct 217. Since the heat-exchangers are not contiguous, one sub-portion 222E of the first engine core exhaust path 222 corresponds to azimuthal gaps between adjacent heat-exchangers 222A-D.

An intermediate or buffer heat-exchange fluid, for example nitrogen, is circulated within a loop path 240 during operation of the aircraft 100, the loop path 240 passing through the heat-exchangers 230A-D in series and also through the heat-exchanger 250. The loop path 240 includes a pump 242 to provide circulation of the buffer heat-exchange fluid and a heater 244 which prevents the buffer fluid freezing, for example on engine start-up or during a sudden increase in fuel flow to the combustor 208, which may for example happen during rapid acceleration of the aircraft 100. Buffer fluid is supplied to the loop path from a storage tank 246 which may be mounted on the exterior of the engine 108A. In operation of the aircraft 100, heat is transferred from each of the sub-portions 222A-D of the first engine core exhaust path 222 (collectively passing the first portion of the engine core exhaust mass flow) to the buffer fluid within the loop path 240 by means of a respective heat-exchanger 230A-D, and from the buffer fluid within the loop path 240 to hydrogen fuel *en route* from the hydrogen storage tank 106 to the combustor 208 by means of the heat-exchanger 250. Similarly, heat is transferred from a first portion of the engine core exhaust mass flow within the port turbofan engine 108B by means of recuperator heat-exchangers equivalent to the heat-exchangers 230A-D to a buffer fluid within a loop path 340, and from the buffer fluid to hydrogen *en route* from the hydrogen storage tank 106 to the combustor 308 of the port turbofan engine 108B.

The fuel and heat exchange system of Figure 3 provides appropriate heating of hydrogen fuel from the hydrogen store 106 prior to its combustion within the combustors 208, 308 of the turbofan engines 108A, 108B. The use of an inert buffer heat-exchange fluid, such as nitrogen, within the loop paths 240, 340 reduces the risks of fire and explosion compared to a case where hydrogen fuel (or any other type of fuel) is heated directly by a recuperator.

After interacting with the heat-exchangers 230A-D, the first portion of the engine core exhaust mass flow has a temperature intermediate those of the second portion of the engine core exhaust mass flow (on the second engine core exhaust path 224) and the bypass flow (on the bypass flow path 220).

In some variants of the engine 108A, the recuperator heat-exchangers are arranged in parallel rather than in series. In some variants of the engine 108A, there may be more or fewer than four recuperator heat-exchangers. In some variants of the engine 108A, the heater 244 may be omitted if there is little or no risk of the buffer fluid freezing.

The cross-sectional area of the recuperator duct 217 is generally annular and increases in the direction downstream from second axial position 298 so that the flow velocity of the first portion of the engine core exhaust mass flow on the first engine core exhaust path 222 is reduced to allow adequate flow diffusion after entering the recuperator duct 217 via the scoop 225. The efficacy of the heat-exchangers 230A-D is thereby increased.

The recuperator duct 217 is configured to accommodate between 10% and 25% of the engine core exhaust mass flow output by the turbine section 215, the remainder exiting the turbofan engine 108A via the second engine core exhaust path 224. A preferred range for the percentage of the engine core exhaust mass flow output by the turbine section 215 which should exit the turbofan engine 108A via the recuperator duct 217 on the first engine core exhaust path 222 is between 15% and 20%. This is likely to provide optimum heat transfer to the buffer fluid without providing excessive blockage of the engine core exhaust mass flow. Since the engine core exhaust mass flow exits the turbofan engine 108A via two engine core exhaust paths 222, 224 and since the second engine core exhaust path 224 accommodates the majority of the engine core exhaust mass flow, the probability of foreign- or domestic-object damage to the heat-exchangers 230A-D is reduced compared to an engine of standard design incorporating a recuperator.

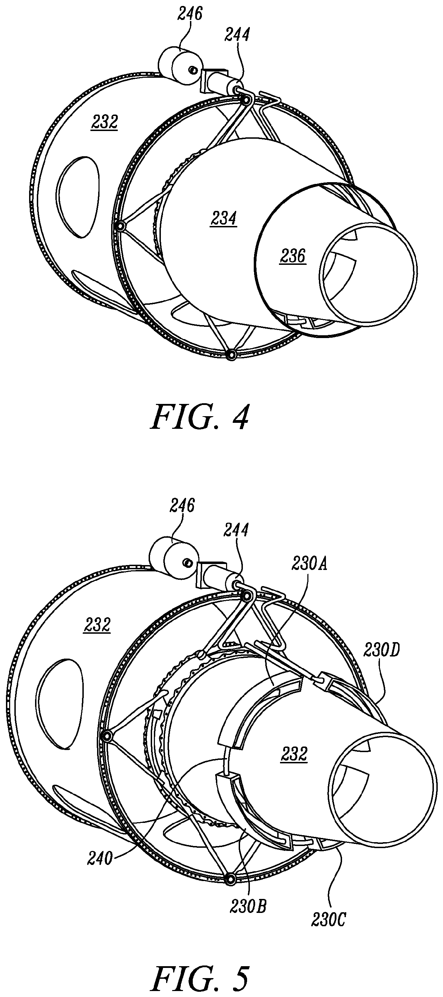

Figure 4 shows the dispositions of the engine nacelle 232 and the first and second engine core nacelle portions 234, 236. Figure 5 is similar to Figure 4 except that the first engine core nacelle portion 234 is omitted, so that the heat-exchangers 230A-D and loop path 240 are visible.

Although the turbofan engine 108A features concentric engine core exhaust paths 222, 224, other arrangements are possible and contemplated. For example, the engine core of an engine may bifurcate downstream of the turbine section of the engine to form two laterally separated exhausts. In addition, the concept described above may be applied to other types of gas turbine engine, such as turbo-jet, turbo-prop etc and also to ground-based static gas turbine engines.

## Claims

1. A gas turbine engine (108A) comprising an engine core (201) having first (222) and second (224) engine core exhaust paths arranged to pass first and second portions respectively of the mass flow of the engine core exhaust of the engine during operation thereof, and a heat-exchange system comprising:
(i) a recuperator system (230A-D) disposed within the first engine core exhaust path and arranged to transfer heat from the first portion of the mass flow of the engine core exhaust to a buffer fluid; and
(ii) a heat exchanger (250) arranged to transfer heat from the buffer fluid to fuel within a fuel path arranged to convey fuel to a combustor (208) of the gas turbine engine.

2. A gas turbine engine according to claim 1 wherein the engine core has a central longitudinal axis (295) and comprises an engine core nacelle (238) having first (234) and second (236) engine core nacelle portions, the first engine core nacelle portion extending axially from the upstream end (296) of the engine core nacelle to a first axial position (298) downstream of the turbine section of the gas turbine engine and the second engine core nacelle portion being disposed radially inwardly of the first engine core nacelle portion and extending axially from a second axial position (297) downstream of the turbine section to a downstream end (299) of the engine core nacelle, the second axial position being upstream of the first axial position, and wherein the first engine core exhaust path is located radially within an annulus defined by the first and second engine core nacelle portions and the second engine core exhaust path is located radially inwardly of the second engine core nacelle portion.

3. A gas turbine engine according to claim 2 wherein the recuperator system comprises a plurality of heat-exchangers (230A-D) arranged in series or in parallel within a loop path (240) which includes a pump (242) and which is arranged to circulate the buffer fluid through the heat-exchangers, the heat-exchangers being distributed azimuthally with respect to the central longitudinal axis of the gas turbine engine.

4. A gas turbine engine according to claim 3 wherein the individual heat-exchangers are distributed axially with respect to the central longitudinal axis of the gas turbine engine.

5. A gas turbine engine according to claim 3 or claim 4 wherein the loop path includes a heater (244) arranged to heat buffer fluid within the loop path.

6. A gas turbine engine according to any of claims 2 to 5 wherein the cross-sectional area of the annulus defined by the first and second engine nacelle portions increases downstream of the second axial position.

7. A gas turbine engine according to any of claims 2 to 6 wherein the engine core has an exhaust cone section (280) defined by the engine nacelle and the engine core nacelle at positions downstream of the second axial position.

8. A gas turbine engine according to any of claims 2 to 7 and comprising an engine nacelle (232) which terminates at an axial position intermediate the first and second axial positions.

9. A gas turbine engine according to any preceding claim wherein the first engine core exhaust path is arranged to pass between 10% and 15% of the engine core exhaust mass flow output by the turbine section of the gas turbine engine.

10. A gas turbine engine according to any preceding claim wherein the gas turbine engine is a hydrogen-burning gas turbine engine and the fuel path is arranged convey hydrogen fuel to the combustor.

11. A gas turbine engine according to any preceding claim wherein the buffer fluid is nitrogen.

12. An aircraft (100) comprising a gas turbine engine (108A) according to any preceding claim.
